Europäisches Patentamt

European Patent Office

Office européen des brevets

(19)

(11) **EP 0 685 061 B1**

(12)

# EUROPÄISCHE PATENTSCHRIFT

(45) Veröffentlichungstag und Bekanntmachung des Hinweises auf die Patenterteilung:
**23.06.1999 Patentblatt 1999/25**

(21) Anmeldenummer: **95903340.8**

(22) Anmeldetag: **14.12.1994**

(51) Int Cl.⁶: **G01D 5/14**, H03K 5/12

(86) Internationale Anmeldenummer:
**PCT/EP94/04140**

(87) Internationale Veröffentlichungsnummer:
**WO 95/16896 (22.06.1995 Gazette 1995/26)**

(54) **VERFAHREN UND VORRICHTUNG ZUR ERFASSUNG DER POSITION ROTIERENDER WELLEN**

METHOD AND DEVICE FOR DETERMINING THE POSITION OF ROTATING SHAFTS

PROCEDE ET DISPOSITIF PERMETTANT DE DETECTER LA POSITION D'ARBRES ROTATIFS

(84) Benannte Vertragsstaaten:
**DE FR GB IT SE**

(30) Priorität: **17.12.1993 DE 4343198**

(43) Veröffentlichungstag der Anmeldung:
**06.12.1995 Patentblatt 1995/49**

(73) Patentinhaber: **AB Elektronik GmbH**
**D-59368 Werne (DE)**

(72) Erfinder: **PAPE, Peter**
**D-59192 Bergkamen (DE)**

(74) Vertreter: **Hoffmeister, Helmut, Dr. Dipl.-Phys.**
**Patentanwalt,**
**Postbox 38 28**
**48021 Münster (DE)**

(56) Entgegenhaltungen:
**DE-A- 2 114 149     DE-A- 3 201 811**
**DE-A- 3 904 958     DE-B- 1 237 173**
**GB-C- 990 993       US-A- 5 083 282**

## Beschreibung

Die Erfindung betrifft ein Verfahren und eine Vorrichtung zur Erfassung der Position rotierender Wellen bei dem

- vor einem Hallsensorelement mit zugeordnetem Magnet ein Impulsrad mit einer Winkelgeschwindigkeit w bewegt wird, das mit Zähnen versehen ist, die eine ansteigende und eine abfallende Zahnflanke aufweisen, wobei
- das Hallsensorelement den zeitlichen Verlauf einer magnetischen Flußdichte durch das Impulsrad als Hallspannungssignal aufnimmt und hieraus ein digitales Ausgangssignal mit Übergängen vom Low- zum High-Pegel und High- zum Low-Pegel erzeugt.

Ein Verfahren und eine Vorrichtung der eingangs genannten Art ist aus DE-A-3 904 958 bekannt. An einem Maschinenteil sind gleichmäßig über dessen Umfang verteilt mehrere Zähne angebracht. Sie tauchen beim Umlauf des Maschinenteils nacheinander in einen Luftspalt eines Differential-Feldplattensensors ein, der mit einem Erregermagneten ausgestattet ist. An einer der Feldplatten ist ein Schmitt-Trigger als Schwellwertschalter angeschlossen, dem ein Integrierglied nachgeschaltet ist. Mit dem Integrierglied ist ein Gatter verbunden, dessen Ausgang allein von der Winkelposition des Maschinenteils abhängige Impulse zur Verfügung stehen.

Nachteilig ist, daß bei Rechts- und Linkslauf des Maschinenteils Spannungsverläufe mit unterschiedlichen Flanken erzeugt werden, die jeweils eine Einschaltschwelle des Triggers über- und eine Ausschaltschwelle unterschreiten. Hierdurch wird eine genaue Zuordnung der Zahngestalt zur Meßkurve und damit zur Feststellung der Winkelposition erschwert.

Ein Verfahren der genannten Art ist auch aus der DE-A-3 220 896 bekannt. Hierbei wird ein Sensor verwendet, der den zeitlichen Verlauf der Flußdichte B (t) mißt, wobei eine Segmentscheibe aus ferromagnetischen Blech an einem Hallsensorelement vorbeiläuft. An das Hallsensorelement schließt sich eine Auswerteschaltung an, die auch einen Differenzierer für das Signal B(t) umfaßt, d.h. ein differenziertes Signal B'(t) erzeugt. Allerdings wird das differenzierte Signal lediglich dazu verwendet, eine Torschaltung zu steuern, die wiederum einen Zähler betätigt. Die Zahl der Takte wird der Länge der Segmente der Segmentscheibe zugeordnet. Das differenzierte Signal steuert also lediglich eine Torschaltung. Eine exakte Zuordnung der Zahnflanken zu der gewonnenen Kurve ist demnach nicht gegeben.

Aus der DE-A-2 114 149 ist es bekannt, den Signalverlauf eines Ausgangssignals in einer ersten Differenzierstufe in ein differenziertes und danach das differenzierte in ein Signal mit einem ausgeprägten positiven und einem ausgeprägten negativen Impuls umzuwandeln. Dieses Signal wird in einer weiteren Differenzierstufe differenziert. Das dem dritten Differentialquotienten des Ausgangssignals entsprechende Signal wird einer Phasenumkehrstufe zugeführt, an deren Ausgang ein Korrektursignal abnehmbar ist. Dieses Korrektursignal wird in einer Addierstufe dem Ausgangssignal hinzugefügt, so daß am Ausgang der Addierstufe ein Signal abnehmbar ist, das allerdings nur steilere Flanken aufweist.

Aus der DE-B-1 237 173 ist ein Verfahren und eine Schaltung bekannt, bei dem eine Eingangsspannung mit einer ansteigenden und einer abfallenden Flanke einer Differenzierschaltung zugeführt und dort in ein differenziertes Signal umgeformt wird. Dieses Signal wird dann einem Gleichrichterblock zugeführt, der der Umkehrung einer Polarität und zur Zusammensetzung zweier Signale dient. Die Ausgangsspannung des Gleichrichterblocks wird einer Schwellwertschaltung zugeführt, die hieraus eine Rechteckspannung erzeugt. Eine Begrenzer- und Klemmschaltung bewirkt, daß die Rechteckspannung eine Form annimmt, die der Eingangsspannung ähnelt, aber weitgehend rechteckig ist.

Nachteilig ist, daß dieses Verfahren die Schaltung nur zur Flankenversteilerung von unerwünscht abgerundeten Impulsen, wie sie bei Radarempfängern oder Fernübertragunsanlagen auftreten, einsetzbar ist.

Weiterhin ist bekannt (DE-A-4 209 212), gegenüber einem rotierenden Zahnrad mit Permanentmagnet einen Differential-Hallsensorkreis mit zwei Hallsensoren anzuordnen. Durch eine spezielle Teilung erzeugt das rotierende Zahnrad in den beiden Hallsensoren phasenverschobene Signale. Damit müssen zur Ermittlung der Stellung des Zahnrades mindestens zwei Zähne abgetastet werden. Dies erfordert eine relativ hohe Geschwindigkeit des Impulsrades. Außerdem ist eine direkte Zuordnung der Zahngestalt zur Kurve nicht gegeben.

Schließlich ist in der FR-A-2 571 134 eine Vorrichtung beschrieben, bei der ein mit einer Welle verbundenes Zahnrad vorgesehen ist, in dessen Wirkungsbereich ein Hallsensor angeordnet ist. Bei der Drehung des Zahnrades wird der magnetische Fluß B(t) erfaßt, der grundsätzlich sinusförmig ist, aber im Bereich von Zahnlücken eine Anomalität aufweist. Der Verlauf der Anomalitäten wird mathematisch ausgewertet. Eine genaue Zuordnung der Zahnpositionen zu einer Meßkurve ist nicht gegeben.

Der Erfindung liegt danach die Aufgabe zugrunde, ein Verfahren und eine Vorrichtung zur Erfassung der Position rotierender Wellen anzugeben, die eine der Zahnflankenposition genau entsprechende Kurve erzeugt und damit eine exakte Positionserfassung der rotierenden Welle erlaubt.

Diese Aufgabe wird durch ein Verfahren gelöst, das in Anspruch 1 beschrieben ist.

Dabei wird die Erkenntnis genutzt, daß bei der Drehung eines Impulsrades die Zahnflanken jeweils die größten magnetischen Flußdichteänderungen in der Zeiteinheit ergeben. Diese Größe ist unabhängig von der Absolutgröße des Flusses und ist somit Einflüssen der Temperatur, des Arbeitsabstandes und der Toleranzen der Hallsonde nicht unterworfen.

Die Verwendung des Verfahrens erlaubt demnach den Bau eines analog arbeitenden Hallsensors, der von praktisch beliebigen Impulsrädern hochgenaue, digitale Signale abbilden kann. Die jeweilige Position eines Zahns eines Impulsrades genau und damit die entsprechende Stellung einer Nockenwelle, Kurbelwelle oder dergleichen ebenso genau bestimmt werden.

Dadurch, daß aus dem differenzierten Meßsignal das rechteckförmige Meßpunktsignal gebildet wird, dessen steigende Flanke durch den beginnenden maximalen Anschlag und dessen fallende Flanke durch den beginnenden negativen Ausschlag und aus dem rechteckförmigen Meßpunktsignal das Eckpunktmeßsignal erzeugt wird, dessen Scheitelwert mit dem höchsten Wert und dessen Sohlewert mit dem tiefsten Punkt des niedrigsten Wertes des differenzierten Meßsignals zusammenfällt, ist es möglich, ein analoges Meßsignal, das mit hoher Genauigkeit erfaßt worden ist, in ein digitales Meßsignal umzuformen.

Eine Vorrichtung zur Lösung der Aufgabe ist durch die Merkmale des Anspruches 2 gegeben.

Der Verstärker der Wendepunkterkennungsschaltung ist dabei vorteilhafterweise als ein erster Differenzverstärker ausgebildet. Mit diesem Element kann das differenzierte Signal schrittweise in ein digitales Ausgangssignal umgeformt werden.

Vorteilhaft ist es, wenn der verwendete bidirektionale Treiber aus zwei miteinander verbundenen Widerständen besteht, die jeweils an der Basis eines Transistors anliegen. Zwischen der Verbindung des ersten Widerstandes und der Basis des ersten Transistors und der Verbindung des zweiten Widerstandes mit dem zweiten Transistor sind in Reihe zwei Dioden angeordnet, die vorteilhafterweise als analoges UND-Gatter geschaltet sind.

Vorteilhaft ist es, wenn das Differenzierungsglied aus den Teilen gemäß Anspruch 4 besteht.

Es ist auch möglich, anders ausgebildete Differenzierglieder einzusetzen, durch die es möglich ist, die Form eines Impulses mittels Übertragung durch lineare oder nicht-lineare Übertragungsglieder entsprechend zu beeinflussen. Bei dem erfindungsgemäßen Differenzierungsglied erfolgt eine gezielte Impulsgenerierung in der Form, daß das Maximum und das Minimum entsprechend den Zahnflanken exakt ausgebildet werden.

Eine Hall-Verstärkerschaltung in Form eines integrierten Schaltkreises (IC) sichert eine direkte Eingabe des ermittelten Wertes für eine weitere Umformung.

Für das Impulsrad lassen sich Beispiele verschiedener Zahnformen angeben. Üblicherweise werden Konfigurationen von bekannten Impulsrädern verwendet, die entsprechend dem im Motormanagement vorgesehenen Daten gestaltet sind.

Die Impulsräder sind in bekannter Weise aus weichmagnetischem Werkstoff hergestellt. Ein zugehöriger Magnet hingegen kann als Dauermagnet, besonders aus Samarium-Kobalt, Barium-Titanat-Ferrit, Seltenenerden-Magnetstoffe oder dergleichen ausgebildet sein.

Die Erfindung wird nachstehend an einem Ausführungsbeispiel näher erläutert. Es zeigen:

Fig. 1 ein Prinzipschaltbild einer Vorrichtung zur Erfassung der Position rotierender Wellen gemäß Erfindung;

Fig. 2 ein Blockschaltbild einer Wendepunkterkennungsschaltung gemäß Fig. 1;

Fig. 3 einen detaillierten Schaltplan einer Vorrichtung gemäß Fig. 1;

Fig. 4 eine synchrone Übersicht von auftretenden Signalverläufen einer Schaltung gemäß Fig. 3 in einer schematischen Darstellung;

Fig. 5 ein Impulsrad einer Vorrichtung gemäß Fig. 1 in einer schematischen Seitenansicht;

Fig. 6 ein weiteres Impulsrad einer Vorrichtung gemäß Fig. 1 in einer schematischen Seitenansicht und

Fig. 7 einen Schnitt eines Impulsrades gemäß 6 entlang der Linie VII - VII.

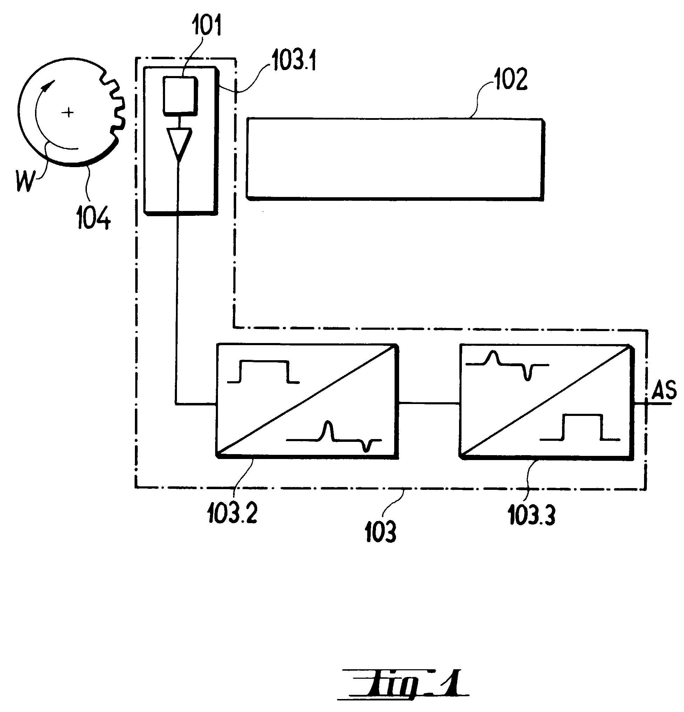

Eine Vorrichtung gemäß Erfindung umfaßt zur Erfassung der Position rotierender Wellen ein Hallsensorelement 101 gemäß Fig. 1, das in einem Auswerteschaltkreis 103 angeordnet ist. Der Auswerteschaltkreis 103 setzt sich aus einer integrierten komplexen Hall-Verstärkerschaltung 103.1, einem Differenzierglied 103.2 und einer Wendepunkterkennungsschaltung 103.3 zusammen. Im Bereich des Hallsensorelementes 101 ist ein Magnet 102 positioniert. Dieser Magnet ist ein Dauermagnet, z.B. aus Samarium-Kobalt, Barium-Titanat-Ferrit, Seltenenerden-Magnetstoffen oder dergleichen ausgebildet. Möglich ist auch besonders ausgebildete Elektromagnete einzusetzen.

Außerdem ist vor dem Hallsensorelement 101 ein Impuls zahnrad 104 positioniert. Verschiedene Ausführungsformen sollen im folgenden beschrieben werden.

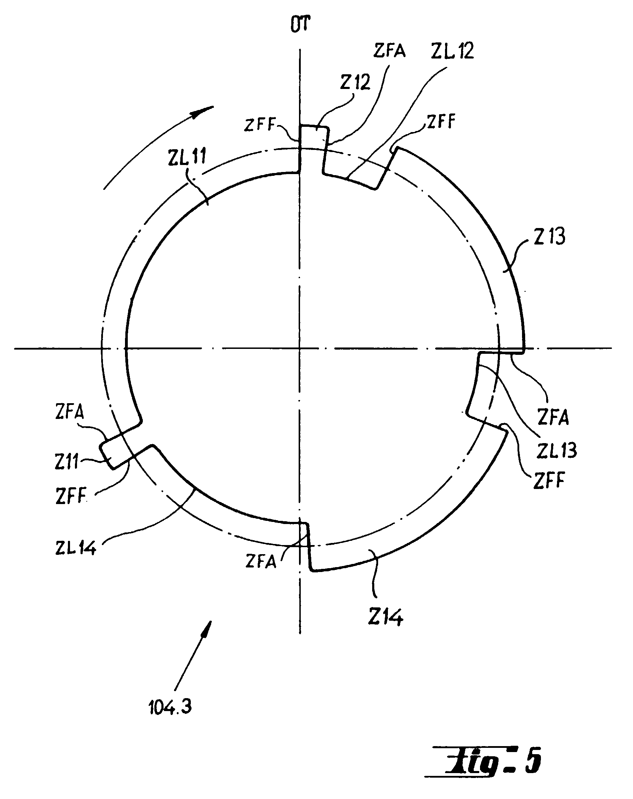

In Fig. 5 ist ein Impulsrad 104.3 dargestellt, das mit der Nockenwelle verbunden ist. "OT" bezeichnen den oberen Totpunkt. Das Impulsrad weist Zähne ZII, Z12, Z13 und Z14 auf. Die Zähne ZII und Z22 sind gleich ausgebildet und haben eine Breite von etwa 8° bei 360° Gesamtumfangswinkel. Dagegen haben die Zähne Z13 und Z14, die ebenfalls gleich ausgebildet sind, eine Breite von jeweils 65°.

Die Zahnflanken der Zähne ZII und Z12 sind wie folgt beabstandet:

    a) die ansteigende Zahnflanke ZFA des Zahns ZII hat von der absteigenden Zahnflanke ZFF einen Abstand von 8°;

    b) die abfallende Zahnflanke ZFF des Zahnrads ZII hat von der abfallenden Zahnflanke ZFA des Zahnrades Z14 einen Abstand von 60°;

    c) die ansteigende Zahnflanke ZFA des Zahnrades Z14 hat von der abfallenden Zahnflanke ZFF des Zahnrades Z14 einen Abstand von 65°;

    d) die abfallende Zahnflanke ZFF des Zahnrades Z14 hat von der ansteigenden Zahnflanke ZFA des Zahnrades Z13 einen Abstand von 20°;

    e) die ansteigende Zahnflanke ZFA des Zahnrades Z13 hat von der abfallenden Zahnflanke ZFF des Zahnrades Z13 einen Abstand von 65°;

    f) die abfallende Zahnflanke ZFF des Zahnrades Z13 hat von der ansteigenden Zahnflanke ZFA des Zahnrades Z12 einen Abstand von 20°;

    g) die ansteigende Zahnflanke ZFA des Zahnrades Z12 hat von der abfallenden Zahnflanke des Zahnrades Z12 einen Abstand von 8°;

    h) die abfallende Zahnflanke des Zahnrades Z12 hat von der ansteigenden Zahnflanke des Zahnrades ZII einen Abstand von 114°.

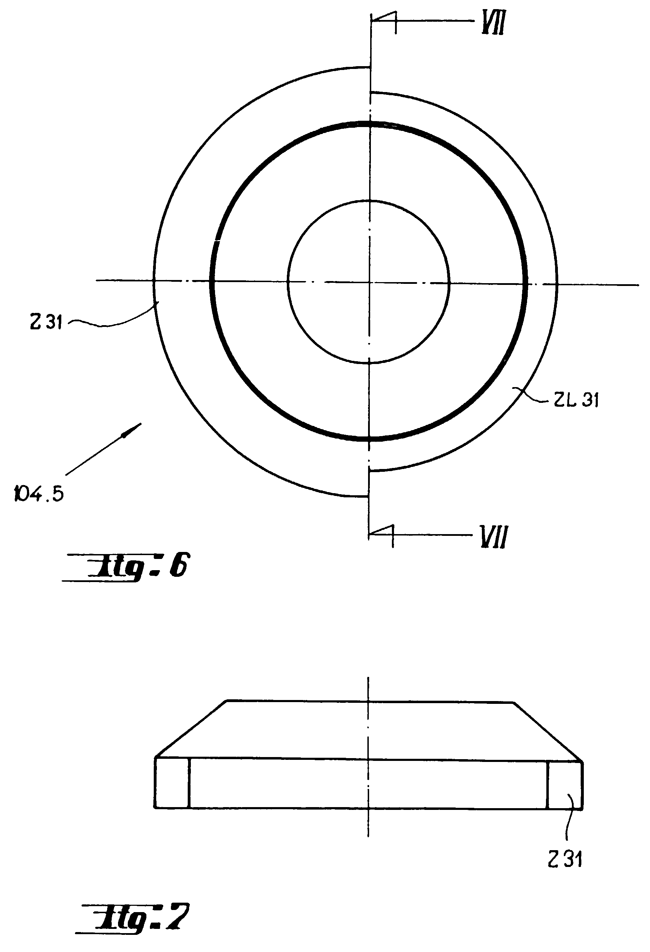

In den Figuren 6 und 7 ist ein Impulsrad 104.5 dargestellt. Es besitzt einen einzigen Zahn Z31 und eine einzige Zahnlücke ZL31. Der Zahn Z1 hat beispielsweise eine Breite von 179°. Auch derartige extreme Zahnformen können von der Vorrichtung erfaßt werden.

Die Zahnräder 104, 104.3 und 104.5 drehen sich mit einer Winkelgeschwindigkeit w von vor dem Hallsensorelement 101.

Untersuchungen an derartigen Impulsrädern haben ergeben, daß an der Zahnflanke sich die magnetische Flußdichte B zeitlich am schnellsten ändert. So hat die erste zeitliche Ableitung von B:

$$B'(t) = \frac{dB(t)}{dt}$$

ein ausgeprägtes Maximum an der ansteigenden Zahnflanke ZFA und ein ausgeprägtes Minimum an der abfallenden Zahnflanke ZFF. Dieser Effekt wird der Erfindung zugrundegelegt.

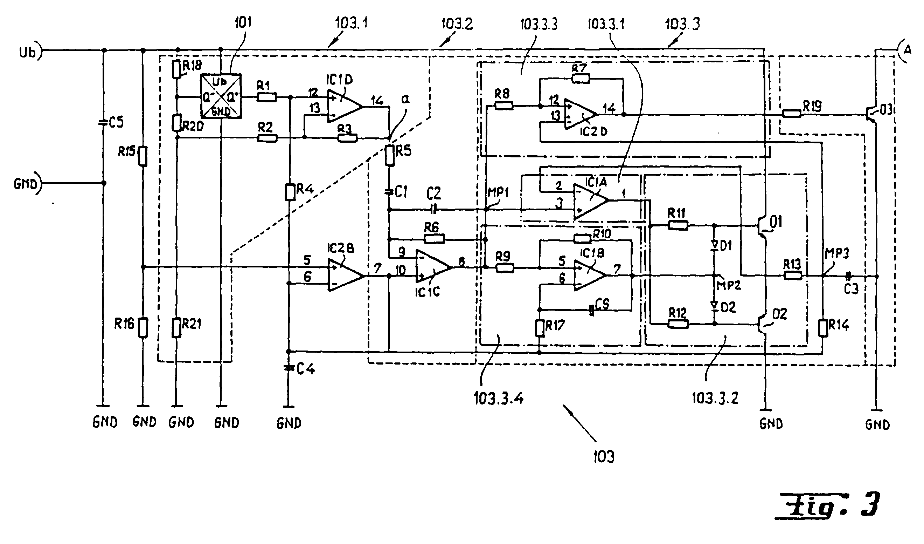

Gemäß Fig. 3 ist das Hallsensorelement 101 in einen Auswerteschaltkreis 103 eingebettet. Das Hallsensorelement 101 ist mit einem Eingang "$U_b$" an Betriebsspannung $U_b$ und mit seinem gegenüberliegenden Eingang "GND" an Erde (entspricht Ground) GND angeschlossen. Der weitere Eingang Q- liegt zwischen Widerständen R18 und R20, die zusammen mit einem Widerstand R21 zwischen $U_b$ und Erde GND in Reihe liegen. An einem Eingang Q+ ist ein Widerstand R1 angeschlossen.

Das Herz des Auswerteschaltkreises 103 bilden sechs Differenzverstärker IC1A, IC1B, IC1C, IC1D, IC2B und IC2D und neben den Differenzverstärkern zwei als UND-Gatter geschaltete Dioden D1 und D2, sowie ein Kondensator C3.

Am Eingang 12 des Differenzverstärkers IC1D ist der Widerstand R1 und ein Widerstand R4, der über einen Kondensator C4 an Ground GND liegt, geschaltet. Der zweite Eingang 13 des Differenzverstärkers IC1D ist zwischen zwei Widerständen R2 und R3 angeschlossen. Der Widerstand R2 führt zu der Verbindung zwischen den Widerständen R20 und R21. Mit dem Ausgang 14 des Differenzverstärkers IC1D ist der Widerstand R3 und der Widerstand R5 verbunden. Über den Kondensator C1 führt der Widerstand R5 zum ersten Eingang 9 des Differenzverstärkers IC1C.

Vom Kondensator C1 geht eine Leitung ab, an der ein Kondensator C2 liegt, und eine Leitung, in der ein Widerstand R6 angeordnet ist.

Der Differenzverstärker IC2B liegt mit seinem einen Eingang 5 zwischen den zwischen Betriebsspannung $U_b$ und Ground GND in Reihe liegenden Widerständen R15 und R16. Sein zweiter Eingang 6 ist, wie bereits beschrieben, zwischen Widerstand R4 und Kondensator C4 angeschlossen. Sein Ausgang 7 ist an einer Leitung, die ebenfalls zu der Verbindung zwischen dem Widerstand R4 und dem Kondensator C4 führt, angeschlossen. Am Ausgang ist er darüber hinaus mit dem zweiten Eingang 10 des Differenzverstärkers IC1C, dessen Ausgang auf einen Widerstand R9 führt, verbunden.

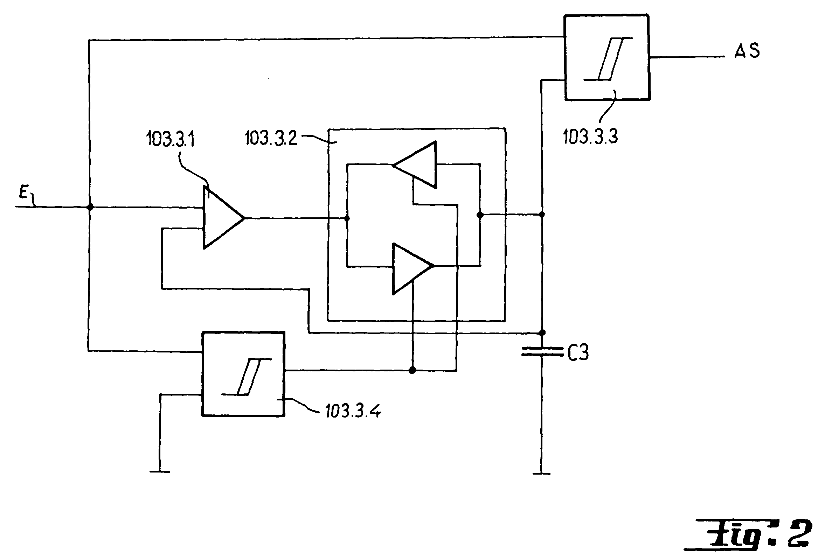

Der eine Eingang 3 des Differenzverstärkers IC1A ist mit einer Leitung verbunden, die zum Kondensator C2 führt. Die Leitung kreuzt bei MP1 eine weitere Leitung, an die IC1c und R9 und R6 angeschlossen sind. Der Kreuzungspunkt MP1 bildet den Eingang E der Wendepunkterkennungsschaltung 103.3 (vgl. Fig. 2).

Zum anderen Eingang 2 des Differenzverstärkers IC1A führt über einen Widerstand R13 eine Leitung vom Kondensator C3. Der Widerstand R13 liegt zwischen zwei Transistoren 01 und 02.

Die Basis beider Transistoren 01 und 02 wird vom Ausgang des Differenzverstärkers IC1A über die Widerstände RII und R12 angesteuert, zwischen denen die bereits als logisches UND-Gatter beschriebenen Dioden D1 und D2 geschaltet sind. Zwischen diesen beiden Dioden D1 und D2 ist am Kreuzungspunkt MP2 der Ausgang des Differenzverstärkers IC1B angeschlossen. Dessen Ausgang führt darüber hinaus über einen Widerstand R10 zu einem ersten Eingang 5 und über einen Kondensator C6 zu einem zweiten Eingang 6. An dem ersten Eingang 5 ist weiterhin der Widerstand R9 angeordnet, während zwischen dem Eingang 6 und einer Leitung zwischen C4 und R14 bzw. dem Kondensator C6 sich noch ein Widerstand R17 befindet.

Die Leitung von der Betriebsspannung $U_b$ wird auf den Transistor 01 zum Transistor 02 geschaltet und endet an GND.

Der Differenzverstärker IC2D ist zwischen dem Meßpunkt MP1 und seinem Eingang 12 mit einem Widerstand R8 beschaltet. Außerdem liegt zwischen diesem Eingang 12 und dem Ausgang 14 eine Widerstand R7. Der Ausgang 14 führt außerdem über den Widerstand R19 und einen dritten Transistor 03 sowohl zum Ausgang A als auch zum Kondensator C3, als auch zu GND.

Der zweite Eingang 13 des Differenzverstärkers IC2D ist zwischen dem Widerstand R13 und der Kapazität C13 angeschlossen an den Meßpunkt MP3 und führt zu dem Widerstand R14.

In Fig. 3, die sich abstrahiert in Fig. 2 wiederfindet, sind folgende Bauelemente durch Umrandungen zusammengefaßt:

- Differenzverstärker IC1A zu einem Verstärker 103.3.1,
- Dioden D1 und D2, Transistoren 01 und 02 und Widerstände R11 und R12 zu einem bidirektionalen Treiber 103.3.2,
- Differenzverstärker IC2D, Transistor 03 und Widerstände R7, R8 und R19 zu einem Komparator 103.3.3 und
- Differenzverstärker IC1B, Kondensator C6 und Widerstände R9, R10 und R17 zu einem Komparator 103.3.4.
- Differenzverstärker IC1C, Kondensatoren C1 und C2 und Widerstände R5 und R6 zum Differenzierer 103.2 und
- Differenzverstärker IC1D, Hallsensorelement 101 und Widerstände R1, R2, R3, R4, R18, R20 und R21 zur Hall-IC-Verstärkerschaltung 103.1.

Es ist möglich, den Verstärker 103.3.1, den bidirektionalen Treiber 103.3.2 und die Komparatoren 103.3.3. und 103.3.4 anders auszubilden oder handelsübliche Schaltkreise mit geringfügigen Änderungen einzusetzen. Dies gilt mutatis mutandis auch für andere Teile der Schaltkreise.

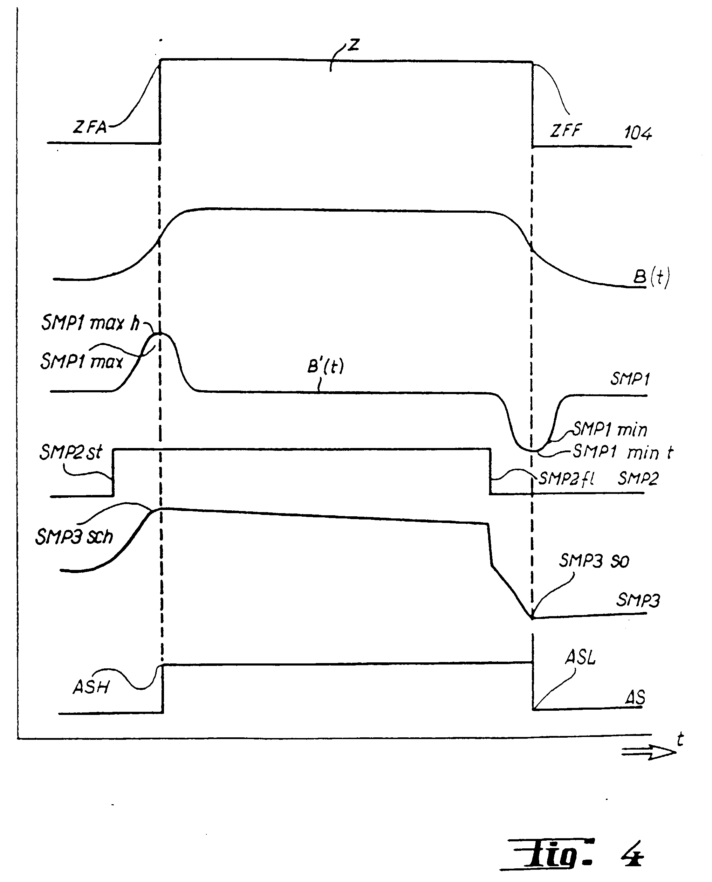

Die Arbeitsweise der erfindungsgemäßen Vorrichtung, wie sie sich aus den dargestellten Ausführungsbeispielen ergibt, sei erläutert, insbesondere in Bezugnahme auf Fig. 1 und 4.

Vor dem Hallsensorelement 101 rotiert ein Impulsrad 104. Wie anhand der Fig. 5 erläutert, weist der Zahn Z eine ansteigende Zahnflanke ZFA und eine abfallende Zahnflanke ZFF auf. Dabei wird durch das Hallsensorelement 101 der Verlauf der Flußdichte B(t) abgefühlt. B(t) ist gekennzeichnet durch eine ansteigende (linke) und eine absteigende (rechte) Flanke. Die der Flußdichte B(t) entsprechenden Signale werden in der Hall-Verstärkerschaltung 103.1 verstärkt und in das Differenziergied 103.2 eingegeben.

Der Differenzverstärker IC1C wandelt das Signal B(t) in ein differenziertes Meßsignal B'(t) = SMP1 um. Dieses Meßsignal SMP1 zeichnet sich durch Ausschläge $SMP1_{max}$ und $SMP1_{min}$ aus; der höchste Punkt des Maximumausschlages ist $SMP1_{maxh}$ und der minimale Punkt ist $SMP1_{mint}$.

Das so umgewandelte differenzierte Meßsignal SMP1 steht am Eingang E der Wendepunkterkennungsschaltung 103.3. am Meßpunkt MP1 an (vgl. Fig. 2 und 3). Mit seinem Maximalwert SMPlmax steuert das differenzierte Meßsignal SMP1 die drei Differenzverstärker IC1A, IC1B und IC1D so an, daß im Meßpunkt MP2 ein rechteckförmiges Meßpunktsignal SMP2 ansteht. Die steigende Flanke $SMP2_{st}$ des rechteckförmigen Meßpunktsignals SMP2 fällt dabei mit dem beginnenden Anstieg des differenzierten Meßsignals SMP1 zusammen. Gleichzeitig wird im Meßpunkt MP3 der Kondensator C3 auf seinen Maximalwert aufgeladen.

Mit Beginn des Minimalausschlags des differenzierten Meßsignals SMP1 wird eine abfallende Flanke $SMP2_{f1}$ des rechteckförmigen Meßsignals SMP2 erzeugt. Das führt zu einer Entladung des Kondensators C3. Das hierdurch erzeugte Eckpunktmeßpunktsignal SMP3 zeichnet sich durch einen Scheitelwert $SMP3_{sch}$ und durch einen Sohlewert $SMP3_{so}$ aus.

Mit dem Erreichen des Scheitelwertes $SMP3_{sch}$ wird insbesondere durch den Differenzverstärker IC2D am Ausgang A ein digitales Ausgangssignal AS erzeugt, das hier seinen High-Pegel und beim Erreichen seines Sohle-Wertes seinen $SMP3_{so}$ seinen Low-Pegel hat.

Wie die Fig. 4 deutlich macht, bildet dabei das digitale Ausgangssignal AS die Form des Zahns Z nach. Kommt z.B. ein Impulsrad 104.3 gemäß Fig. 5 zum Einsatz, wird durch den Zahn Zll eine High-Pegel ASH von kurzer Dauer und durch den Zahn Z13 ein High-Pegel von langer Dauer erzeugt. Die Zahnlücken werden entsprechend als Low-Pegel abgebildet.

Durch die Folge von High- und Low-Pegel ist es möglich, exakt die Stellung aller Zähne Z11, ..., Z14, festzustellen und hieraus auf die Stellung der Welle zu schließen.

Da es auf die absolute Höhe des Hallsignals nicht ankommt, sind Erschütterungsfehler, Langzeitvarianten und dergleichen kaum noch schädliche Einflußgrößen.

## Patentansprüche

1. Verfahren zur Erfassung der Position rotierender Wellen, bei dem

- vor einem Hallsensorelement (101) mit zugeordnetem Magnet (102) ein Impulsrad (104, 104.1, ..., 104.5) mit einer Winkelgeschwindigkeit w bewegt wird, das mit Zähnen (Z) versehen ist, die eine ansteigende und eine abfallende Zahnflanke (ZFA, ZFF) aufweisen, wobei

- das Hallsensorelement (101) den zeitlichen Verlauf einer magnetischen Flußdichte (B) durch das Impulsrad (104,..) als Hallspannungssignal aufnimmt und hieraus ein digitales Ausgangssignal (AS) mit Übergängen vom Low- zum High-Pegel (ASL, ASH) und High-zum Low-Pegel (ASH, ASL) erzeugt,

**dadurch gekennzeichnet,** daß

- das Hallspannungssignal in einem Differenzierglied (103.2) in ein differenziertes Signal (SMP1) umgewandelt wird,
- das differenzierte Signal (SMP1) mit seinem Maximalwert (SMP1$_{max}$) eine Wendepunkter-kennungsschaltung (103.3) ansteuert, die ein rechteckförmiges Meßpunktsignal (SMP2) bil-det,
- dessen ansteigende Flanke (SMP2$_{st}$) durch den beginnenden maximalen Ausschlag (SMP1$_{max}$) und dessen abfallende Flanke (SMP2$_{f1}$) durch den beginnenden negativen Ausschlag (SMP1$_{min}$) erzeugt werden,
- die ansteigende und die abfallende Flanke (SMP2$_{st}$, SMP2$_{f1}$) des rechteckförmigen Meßpunktsignals (SMP2) ein Eckpunktmeßsignal (SMP3) mit einem Scheitelwert (SMP3$_{sch}$) und einem Sohlewert (SMP3$_{so}$) auslöst, und
- mit dem Erreichen des Scheitelwertes (SMP3$_{sch}$) das digitale Ausgangssignal (AS) abgegeben wird, dessen High-Pegel (ASH) durch den Scheitelwert (SMP3$_{sch}$) und dessen Low-Pegel (ASL) durch den Sohlewert (SMP3$_{so}$) erzeugt wird.

2. Vorrichtung zur Erfassung der Position rotierender Wellen mit Hilfe eines Hallsensorelementes (101), vor dem ein Impulsrad (104, 104.1, ..., 104.5) mit einer Winkelgeschwindigkeit w bewegt wird, das mit Zähnen (Z) versehen ist, die eine ansteigende und eine abfallende Zahnflanke (ZFA, ZFF) aufweisen, und bei der das Hallsensorelement (101) den zeitlichen Verlauf einer magnetischen Flußdichte (B) durch das Impulsrad (104,..) als Hallspannungssignal aufnimmt, dadurch gekennzeichnet,

- daß mit dem Hallsensorelement (101) ein Differenzierglied (103.2) verbunden und in dem dieses Signal in ein differenziertes Signal (SMP1) umgewandelt ist,
- daß eine Wendepunkterkennungsschaltung (103.3) vorhanden ist, die sich an das Differenzierglied anschließt, mit der die Maxima (SMP1$_{max}$) und Minima (SPM1$_{min}$) des differenzierten Signals (SMP1) bestimmbar sind, und

- daß aus dem differenzierten Signal (SMP1) ein digitales Ausgangssignal (AS) erzeugbar ist, bei dem die Übergänge vom Low-Pegel (ASL) zum High-Pegel (ASH) die Maxima und die Übergänge vom High-Pegel zum Low-Pegel die Minima des differenzierten Signals (SMP1) wiedergeben,
- wobei die Wendepunkterkennungsschaltung (103.3) einen Verstärker (103.3.1) umfaßt, der mit seinem Ausgang an einem ersten Eingang eines bidirektionalen Treibers (103.3.2),
- und mit seinem ersten Eingang sowohl an einem ersten Eingang eines ersten Komparators (103.3.3) als auch an einem ersten Eingang eines zweiten Komparators (103.3.4) liegt,
- und mit seinem zweiten Eingang an einer Verbindung zwischen einem an Erde (GND) liegenden ersten Kondensator (C3) und einem zweiten Eingang des ersten Komparators (103.3.3), an dem auch ein zweiter Ausgang des bidirektionalen Treibers (103.3.2) liegt, angeordnet ist,
- während ein dritter Eingang des bidirektionalen Treibers (103.3.2) am Ausgang des zweiten mit seinem zweiten Eingang an Erde (GND) liegenden Komparators (103.3.4) angeordnet ist.

3. Vorrichtung nach Anspruch 3, dadurch gekennzeichnet, daß der bidirektionale Treiber (103.3.2) aus zwei miteinander verbundenen Widerständen (R11, R12) besteht, die jeweils an der Basis eines Transistors (O1, O2) anliegen, und daß zwischen der Verbindung des ersten Widerstandes (R11) mit der Basis des ersten Transistors (O1) und der Verbindung des zweiten Widerstandes (R12) mit der Basis des zweiten Transistors (02) zwei in Reihe liegende Dioden (D1, D2) angeordnet sind, die als analoges UND-Gatter geschaltet sind.

4. Vorrichtung nach Anspruch 3, dadurch gekennzeichnet, daß das Differenzierglied (103.2) aus folgenden Teilen besteht:

- einem (zweiten) Differenzverstärker (IC1C), dessen erster Eingang an Erde (GND) und dessen zweiter Eingang mit einem dritten Widerstand (R6), der parallel zum zweiten Differenzverstärker (IC1C) liegt und mit seinem Ausgang verbunden ist,
- einem zweiten Kondensator, der parallel zum dritten Widerstand (R6) liegt, und mit dem Ausgang des zweiten Differenzverstärkers (IC1C) verbunden ist, und
- eine Reihenschaltung eines dritten Kondensators (C1) und eines viertes Widerstandes (R5).

**Claims**

1. A method of detecting the position of rotating shafts, wherein

   - a pulse wheel (104, 104.1, ..., 104.5) provided with teeth (Z) having an ascending and a descending tooth flank (ZFA, ZFF), is moved at an angular velocity w in front of a Hall sensor element (101) with an associated magnet,

   - the Hall sensor element (101) receiving, as a Hall voltage signal, the variations per unit of time of a magnetic flux density (B) through the pulse wheel (104, ...) and generating therefrom a digital output signal (AS) having transitions from the low level to the high level (ASL, ASH) and from the high level to the low level (ASH, ASL),

   characterised in that

   - the Hall voltage signal is converted to a differentiated signal (SMP1) in a differentiator (103.2),

   - with its maximum value ($SMP1_{max}$) the differentiated signal (SMP1) triggers a reversal point recognition circuit (103.3) which forms a rectangular measurement point signal (SMP2),

   - of which the ascending flank ($SMP2_{st}$) is generated by the initial maximum deflection ($SMP1_{max}$) and of which the descending flank ($SMP2_{fl}$) is generated by the initial negative deflection ($SMP1_{min}$),

   - the ascending and the descending flanks ($SMP2_{st}$, $SMP2_{fl}$) of the rectangular measurement point signal (SMP2) produces a corner point measurement signal (SMP3) having a peak value ($SMP3_{sch}$) and a bottom value ($SMP3_{so}$), and

   - when the peak value ($SMP3_{sch}$) is reached the digital output signal (AS) is delivered, of which the high level (ASH) is produced by the peak value ($SMP3_{sch}$) and of which the low level (ASL) is produced by the bottom value ($SMP3_{so}$).

2. Apparatus for detecting the position of rotating shafts by means of a Hall sensor element (101), in front of which a pulse wheel (104, 104.1, ..., 104.5) provided with teeth (Z) having an ascending and a descending tooth flank (ZFA, ZFF) is moved at an angular velocity w, and wherein the Hall sensor element (101) receives, as a Hall voltage signal, the variations per unit of time of a magnetic flux density (B) through the pulse wheel (104, ...), characterised in that

   - a differentiator (103.2) is connected to the Hall sensor element (101) and said signal is converted to a differentiated signal (SMP1) therein,

   - a reversal point recognition circuit (103.3) is provided following the differentiator and enables the maxima ($SMP1_{max}$) and minima ($SMP1_{min}$) of the differentiated signal (SMP1) to be determined, and

   - in that a digital output signal (AS) can be produced from the differentiated signal (SMP1), in which output signal the transitions from the low level (ASL) to the high level (ASH) reproduce the maxima and the transitions from the high level to the low level reproduce the minima of the differentiated signal (SMP1),

   - the reversal point recognition circuit (103.3) comprising an amplifier (103.3.1) of which the output is connected to a first input of a bidirectional driver (103.3.2),

   - and the first input of which is connected both to a first input of a first comparator (103.3.3) and to a first input of a second comparator (103.3.4),

   - and the second input of which is connected to a connection between a first capacitor (C3) connected to earth (GND) and a second input of the first comparator (103.3.3), to which a second output of the bidirectional driver (103.3.2) is also connected,

   - while a third input of the bidirectional driver (103.3.2) is disposed at the output of the second comparator (103.3.4), the second input of which is connected to earth (GND).

3. Apparatus according to claim 3, characterised in that the bidirectional driver (103.3.2) consists of two interconnected resistors (R11, R12), each connected to the base of a transistor (01, 02), and in that two series-connected diodes (D1, D2) connected as an analogue AND gate are disposed between the connection of the first resistor (R11) to the base of the first transistor (01) and the connection of the second resistor (R12) to the base of the second transistor (02).

4. Apparatus according to claim 3, characterised in that the differentiator (103.2) consists of the following parts:

- a (second) differential amplifier (IC1C), the first input of which is connected to earth (GND) and the second input of which is connected to a third resistor (R6) connected in parallel with the second differential amplifier (IC1C) and to its output,

- a second capacitor which is connected in parallel with the third resistor (R6) and to the output of the second differential amplifier (IC1C) and

- a series connection of a third capacitor (C1) and a fourth resistor (R5).

## Revendications

1. Procédé pour détecter la position d'arbres rotatifs, dans lequel

    - devant un élément détecteur à effet Hall (101) auquel est associé un aimant (102), on déplace une roue à impulsions (104, 104.1, ..., 104.5) avec une vitesse angulaire w qui est pourvue de dents (Z) qui présentent un flanc avant et un flanc arrière (ZPA, ZPF),

    - l'élément détecteur à effet Hall (101) captant la courbe dans le temps d'une densité de flux magnétique (B) à travers la roue à impulsions (104, ...) en tant que signal de tension de Hall et produit à partir de ce signal un signal de sortie numérique (AS) avec des transitions d'un niveau bas à un niveau haut (ASL, ASH) et d'un niveau haut à un niveau bas (ASH, ASL),

        caractérisé en ce que

    - le signal de tension de Hall est converti dans un élément différenciateur (103.2) en un signal différencié (SMP1),

    - le signal différencié (SMP1) commande avec sa valeur maximale (SMP1$_{max}$) un circuit de détection de point d'inversion (103.3) qui forme un signal de point de mesure rectangulaire (SMP2),

    - dont le flanc avant (SMP2$_{st}$) est produit par le début de l'excursion maximale (SMP1$_{max}$) et dont le flanc arrière (SMP2$_{fl}$) est produit par le début de l'excursion négative (SMP1$_{min}$),

    - les flancs avant et arrière (SMP2$_{st}$, SMP2$_{f1}$) du signal de point de mesure rectangulaire (SMP2) déclenchent un signal de mesure d'angle (SMP3) avec une valeur maximale (SMP3$_{sch}$) et une valeur minimale (SMP3$_{so}$), et

    - lorsque la valeur maximale (SMP3$_{sch}$) est atteinte, on délivre le signal de sortie numérique (AS) dont le niveau haut (ASH) est produit par la valeur maximale (SMP3$_{sch}$) et dont le niveau bas (ASL) est produit par la valeur minimale (SMP3$_{so}$).

2. Dispositif pour détecter la position d'arbres rotatifs à l'aide d'un élément détecteur à effet Hall (101) devant lequel on déplace une roue à impulsions (104, 104.1, ..., 104.5) avec une vitesse angulaire w qui est pourvue de dents (Z) qui présentent un flanc avant et un flanc arrière (ZFA, ZFF), et dans lequel l'élément détecteur à effet Hall (101) capte la courbe dans le temps d'une densité de flux magnétique (B) à travers la roue à impulsions (104, ...) en tant que signal de tension de Hall, caractérisé en ce

    - que l'élément détecteur à effet Hall (101) est relié à un élément différenciateur (103.2) dans lequel ce signal est converti en un signal différencié (SMP1),

    - qu'il existe un circuit de détection de point d'inversion (103.3) qui se raccorde à l'élément différenciateur et permet de déterminer les maxima (SMP1$_{max}$) et les minima (SMP1$_{min}$) du signal différencié (SMP1), et

    - qu'à partir du signal différencié (SMP1), on peut produire un signal de sortie numérique (AS) dans lequel les transitions d'un niveau bas (ASL) à un niveau haut (ASH) reproduisent les maxima et les transitions d'un niveau haut à un niveau bas reproduisent les minima du signal différencié (SMP1),

    - le circuit de détection de point d'inversion (103.3) comprenant un amplificateur (103.3.1) qui est connecté par sa sortie à une première entrée d'un circuit d'attaque bidirectionnel (103.3.2),

    - et avec sa première entrée aussi bien à une première entrée d'un premier comparateur (103.3.3) qu'à une première entrée d'un second comparateur (103.3.4),

    - et qui est disposé avec sa seconde entrée au niveau d'une jonction entre un premier condensateur (C3) connecté à la terre (GND) et une deuxième entrée du premier comparateur (103.3.3) à laquelle est connectée également une seconde sortie du circuit d'attaque bidirectionnel (103.3.2),

    - tandis qu'une troisième entrée du circuit d'attaque bidirectionnel (103.3.2) est disposée à la sortie du second comparateur (103.3.4) relié à la terre (GND) avec sa deuxième entrée.

3.  Dispositif selon la revendication 2, caractérisé en ce que le circuit d'attaque bidirectionnel (103.3.2) est formé de deux résistances (R11, R12) reliées entre elles qui sont chacune connectées à la base d'un transistor (O1, O2) et que deux diodes (D1, D2) montées en série se trouvent entre la jonction de la première résistance (R11) avec la base du premier transistor (O1) et la jonction de la seconde résistance (R12) avec la base du second transistor (02), lesquelles diodes sont montées en tant que porte ET analogique.

4.  Dispositif selon la revendication 3, caractérisé en ce que l'élément différenciateur (103.2) est formé des éléments suivants :

    -   un (second) amplificateur différenciateur (IC1C) dont la première entrée est reliée à la terre (GND) et dont la deuxième entrée est reliée à une troisième résistance (R6) qui est montée en parallèle avec le second amplificateur différenciateur (IC1C) et est reliée à sa sortie,

    -   un second condensateur qui est monté en parallèle avec la troisième résistance (R6) et est relié à la sortie du second amplificateur différenciateur (IC1C), et

    -   un circuit série formé d'un troisième condensateur (C1) et d'une quatrième résistance (R5).

*Fig. 1*

Fig. 2

EP 0 685 061 B1

*Fig. 3*

*Fig. 4*

Fig. 5

VII

Z 31

ZL 31

104.5

_Fig. 6_

VII

Z 31

_Fig. 7_